# EUROPEAN PATENT APPLICATION

(11) **EP 0 547 635 A2**
(43) Date of publication of application: **23.06.1993**
(21) Application number: 92121638.8
(22) Date of filing: 18.12.1992
(51) Int. Cl.: H04N 13/00

(54) **Method and apparatus for sensing a three-dimensional scene**

(30) Priority: 19.12.1991 US 810610
(71) Applicant: EASTMAN KODAK COMPANY, Rochester, New York 14650-2201 (US)
(72) Inventor: Morton, Roger A., c/o EASTMAN KODAK COMPANY, Rochester, New York 14650-2201 (US)
(74) Representative: Wagner, Karl H., Dipl.-Ing.

(57) **Abstract**

Three imagers (12a, 12b and 12c) so disposed relative to each other as collectively to form images from all unobstructed objects in a scene plane form images of overlapping object regions that respective images sensors (14a, 14b, and 14c) record and digitize. An imager may, for instance, be a combination of a frustoconical reflector (30a) and an ordinary focusing lens (36a), or it may be a 180° fish-eye lens (50a). After a distortion-removal step (16), reconstruction apparatus (18) uses the relative displacements of the objects in overlapping images to determine their three-dimensional positions. With such an arrangement, a user can take, in a single step, all of the three-dimensional data needed for some applications.

## Description

### BACKGROUND OF THE INVENTION

The present invention is directed to optical imaging and in particular to obtaining three-dimensional information concerning objects in a scene.

Advances in computer speed and reductions in the attendant costs have greatly expanded the range of applications in which it is practical to begin with a three-dimensional database representing an object and synthetically to generate a scene depicting the object as it would appear from a selected view point.

In many cases, the database that three-dimensionally represents the object is generated as a product of a computer-aided design process. In such cases, the task in which the data are created in quite labor-intensive, but the labor is an unavoidable part of designing the object that is being depicted. That is, obtaining the information necessary to display the object requires little effort over and above that required to design it. The fact that a certain amount of computer skill is necessary to generate the data base therefore is not a significant deterrent to generating it; one who uses computer-aided-design tools necessarily has some such skill.

There are other applications, however, in which generation of the three-dimensional database would be a significant deterrent, and, in fact, prohibitive. In building renovation, for instance, it would often be desirable to see how an existing building would look with different features added. It could also be desirable to be able to recall how the building (or, for instance, a given room inside it) looks from a particular vantage point without the need to revisit the building. If the architect or contractor could be provided with a three-dimensional representation of the building in his computer so that he could use available imaging software to generate the desired scenes, the architect or contractor could "try" various changes with a computer at his office and demonstrate them to clients, for instance, with a minimum of effort.

Unfortunately, such an approach is not practical in most situations, because obtaining the three-dimensional information is not practical. Entering the information mathematically is, of course, time-consuming, and it can be subject to errors that make the accuracy and effectiveness of the resultant data problematic. Alternatively, the information can be obtained by taking a number of photographs, scanning them, and obtaining three-dimensional information by correlating different images of the same scene, but to obtain enough information by means of this approach often involves piecing together a number of images and obtaining accurate information concerning the relative positions from which they were taken and the directions in which the imagers were aimed. Clearly, it would be easier in many cases simply to revisit the site and physically add or remove furnishings as desired rather than enter enough information into a database that the scene manipulation can be performed by computer.

What is needed is a device that enables a relatively unskilled person to take the information with a minimum of effort so that computer scene manipulation of existing objects can readily be performed.

### SUMMARY OF THE INVENTION

The present invention, which is a method and apparatus for collecting three-dimensional image information, can be so embodied as to enable the user to collect the desired information with little more effort than is needed to take an ordinary photograph. In accordance with this method, light is received by imagers at a plurality of different locations from objects in a common object space, and respective images are simultaneously formed from that light. Three-dimensional positions are derived for objects that appear in a plurality of images thus formed. The light for the images is collected at respective positions that are non-colinear or are otherwise so disposed with respect to each other that light from every unobstructed object spaced at least a minimum distance from the imagers in a scene plane is received by at least two of the imagers. That is, imagers can simultaneously take images from which three-dimensional positions can be determined for all unobstructed objects in a 360° scene. By employing this approach, one can quickly form a database that represents, for instance, substantially the complete arrangement of a room.

### BRIEF DESCRIPTION OF THE DRAWINGS

These and further features and advantages of the present invention are described below in connection with the accompanying drawings, in which:
Figure 1 is a block diagram that depicts a method and apparatus that employ the teachings of the present invention;
Figure 2 is a simplified plan view, with parts broken away, of an apparatus containing imagers so disposed relative to each other as to enable them to be employed to perform the imaging step of the present invention;
Figure 3 is a cross-sectional view of one of the imagers taken at line 3-3 of Figure 2; and
Figure 4 is a view similar to Figure 3 of an alternate embodiment of the present invention.

### DETAILED DESCRIPTION OF ILLUSTRATIVE EMBODIMENTS

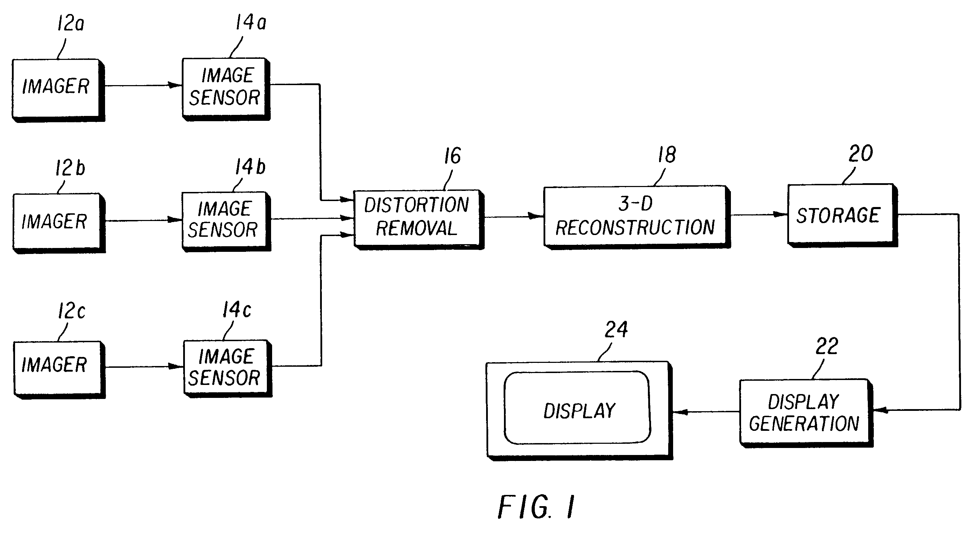

Figure 1 depicts in block-diagram form both the method of the present invention and apparatus for performing it. Three imagers 12a, 12b, and 12c are, as is not apparent in Figure 1, non-colinearly located in space and form images on respective image sensors 14a, 14b, and 14c. As will be described below, the imagers 12 are typically camera optics, while the image sensors 14 can, for instance, be arrays of light-sensitive devices, such as those in electronic cameras, and circuitry for digitizing the outputs of those devices. As will be shown below, the image sensors can also be combinations of photographic film, developing apparatus, and scanners for producing digital representations of the resultant images.

As will become apparent directly, the illustrated embodiment employs an imaging process that introduces distortion, so the system employs a distortion-removal step 16. The resultant undistorted images are applied to a three-dimensional-reconstruction step 18. This step, which determines an object's three-dimensional position from two (or more) images taken from different points of view, is non-trivial since it at least implicitly involves algorithmically determining which point in one image presents the same object point as a given point in another image. However, those skilled in the art will be aware of many successful techniques for achieving this result, such as those described in McLauchlan et al., "Stereoscopic Recovery and Description of Smooth Textured Surfaces," Image and Vision Computing, vol. 9, no. 1, February 1991, pp. 20-26, and the articles that it mentions. The choice among such techniques is not critical to the practice of the present invention.

The result of the three-dimensional reconstruction 18 is an output representing the three-dimensional scene. It may, for instance, be in the form of a value (color or shade of gray) for all locations within an object space at which an object surface has been detected. Preferably, it would be a data-reduced version of such a representation.

An appropriate storage device 20, such as a magnetic-disk memory, stores the resultant data. A display generator 22 drives a display device 24 to present displays generated in various ways from the stored data. The type of display device and display generator are not critical to the invention; they need only be of the type that can generate a scene from information that gives the three-dimensional positions of objects that the scene is to represent. If the stored data represent a room in a house, for instance, the display generator may respond to commands from a user to generate a display that represents the room as it would appear from various viewpoints within it, possibly with various pieces of furniture added or removed.

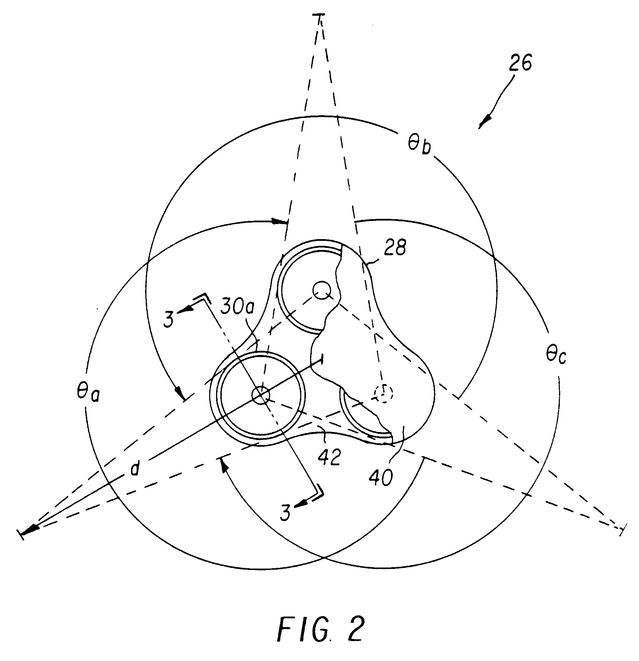

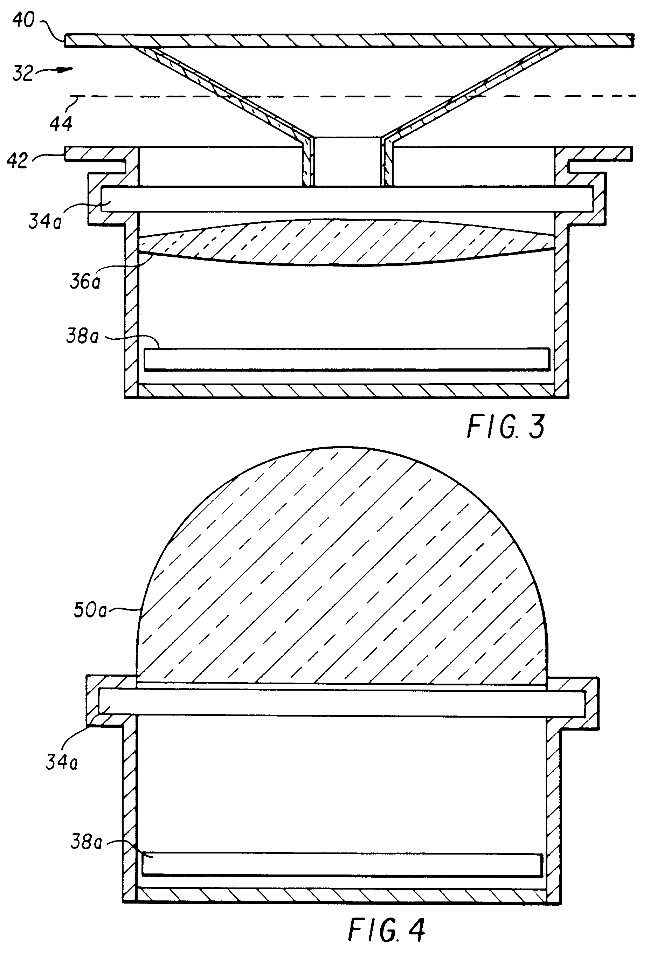

Figure 2 is a plan view of an apparatus 26 containing the three imagers 12 as well as part of the apparatus for providing the image-sensing function 14. An irregular-shaped housing 28 is broken away in Figure 2 to reveal part of one imager's frustoconical reflector 30a, which appears in cross section in Figure 3. The reflective outer surface of reflector 30a receives light that reaches it through an annular passage 32, and it reflects the received light through a shutter/iris mechanism 34a to a lens 36a of Figure 3, whose axis of symmetry is the same as that of the frustoconical reflector 30a. The shutter/iris mechanism is arranged to operate simultaneously with corresponding mechanisms in the other two imagers to control the passage of light from their respective reflectors 30 to respective lenses. A film cartridge 38a lies in the focal plane of the lens 36a (or near it, since the distance between the lens 36a and the film cartridge 38a will be adjustable by means not shown so as to enable the apparatus to focus at various finite distances) and thus receives object-scene images formed by the lens 36a.

In order to prevent diametrically opposite points in the object space from being imaged onto a common image point, baffles 40 and 42 restrict the angles of incidence by which light can reach the reflector 30a. It will nonetheless be appreciated that the apparatus of Figure 3 forms images from all unobstructed objects in a scene plane 44 throughout a wide range of angles. As can be seen in Figure 3, the angular range from which the imager of Figure 3 produces images is at least equal to angle ϑₐ of Figure 2. The corresponding angle for a second imager is angle ϑ_{b} of Figure 2, while that for the third is ϑ_{c}. As can be appreciated from Figure 2, light from an unobstructed object at any location in a scene plane 44 beyond a minimum distance d from the apparatus axis contributes to the images formed by at least two of the imagers.

The remainder of the image-sensing step 14 of Figure 1 is performed by apparatus, not shown, for developing the film, scanning the resultant images, and digitizing the scanner output in a conventional manner. Operation of the apparatus thus results in three annular images that together contain information from all unobstructed objects in plane 44 as well as from some objects above and below that plane. Because of the conical shapes of the reflector surfaces, the images are distorted: they tend to be horizontally "squeezed" at the radially inward portions of the annular images. To determine the three-dimensional positions of the objects from which the imager receives light, therefore, the thus-digitized images are subjected in the illustrated embodiment to a distortion-removal step represented by block 16 of Figure 1.

The "distortion removal" can involve little more than a coordinate transformation, and even a coordinate transformation may not be necessary. Most scanners, of course, scan the image in a raster-scan manner, implicitly employing a Cartesian ("x-y") coordinate system. The coordinates for any given value would thus not bear a straightforward relationship to the object-space locations of the objects. However, a simple conversion to polar coordinates yields a direct conversion from image-space coordinates to object-space coordinates. (And performing radial scanning rather than conventional raster scanning eliminates the need for the transformation.) After the transformation (if necessary), the elevation (φ) and azimuth (ϑ) coordinates of an object-space point in spherical coordinates are directly obtained from the radius (r) and azimuth (ϑ) coordinates, respectively, of the corresponding image point in polar coordinates; the azimuth coordinates are the same, and the elevation (φ) is an inverse trigonometric function of the image-space radius (r), the particular function depending on the imaging-system parameters. That is, each point (r,ϑ) in a given image corresponds to a line directed radially outward at an angle (ϑ,φ(r)) from the origin that its corresponding imager defines. The (readily computed) intersection of the object-space lines defined by corresponding points in two images is, of course, the location of the object-space point commonly imaged at the corresponding image-space points.

In principle, this is the general type of determination made by any of existing three-dimensional-reconstruction methods, such as that described in the McLauchlan et al. article mentioned above, although the specific approaches that some of them employ sometimes obscure this fact. For instance, the approach employed in commonly assigned U.S. Patent Application Serial No. 631,750 filed by Sergei V. Fogel on December 20, 1990, for a Method for Estimating Velocity Vector Fields from a Time-Varying Image Sequence, which I hereby incorporate by reference, computes from two images a "velocity field," i.e., a "velocity" value for each of a plurality of points in an image plane.

The term velocity is used in the Fogel patent because that patent illustrates the Fogel method by way of an example in which a single imager forms images at two different times, and the example depicted there determines the velocity field in the image that would have resulted at some intermediate time. In the present case, of course, the "velocity" field is computed at an intermediate position; there is no time interval, and the quantity of interest is simply the displacement, i.e., the "velocity" multiplied by an assumed (in this case fictitious) time difference. Since the size of the apparent object-position change that results from a known change in viewpoint is an indication of the distance to the object (from, say, the origin that the intermediate image position defines) the Fogel method yields the position of the imaged object in object space. Clearly, the Fogel approach does not explicitly determine correspondences between points in the different images, but it still uses the principle of determining object distance from an image-displacement measure. Other three-dimensional-reconstruction techniques employ different approaches, but they, too, follow the same general principle, and, as was stated above, the choice among these techniques is not critical.

The results of the three-dimensional reconstruction are then stored, as was stated above, for subsequent employment in scene generation.

The advantages of the above-described approach are apparent. By taking exposures with all imagers simultaneously, the user can obtain three-dimensional information from an entire 360° range of directions in a plane without taking careful measurements of the relative positions of the different viewpoints. Moreover, these advantages can be obtained in imagers that differ significantly from that illustrated in the drawings. For example, although the reflector forms a cone segment, i.e., a surface of revolution of a straight line segment, the surface of revolution of a non-linear curve could be used instead, although the distortion removal would be more complicated. Additionally, although the reflectors are in the shape of surfaces of complete 360° revolutions, it is clear that a complete 360° surface is not necessary. Furthermore, the light re-directed by these reflecting surfaces could also be redirected by equivalent transmitting elements.

Indeed, the functions separately performed by the reflector and lens in the embodiment of Figs. 2 and 3 can both be performed by a single 180° fish-eye lens. Fig. 4 depicts such an arrangement, in which a fish-eye lens 50a replaces the reflector 30a and lens 36a.

Since the lens 50a redirects the light without the image overlap of reflector 30a, there is no need to provide the baffles employed in the Figure 3 arrangement. The resultant absence of the elevation restrictions found in the Figure 3 arrangement has significant advantages in some situations. For instance, if the intention is to obtain the image of a room, the apparatus as modified in accordance with Figure 4 can simply be placed on the floor of the room and operated from, say, outside the door of the room by means of a remote cable, and data for the complete room (except for obstructed objects and all or most of the floor) can be taken in a single step with no need for alignment of the positions from which different shots are taken.

It is accordingly apparent that the present invention can be employed in a wide range of embodiments and thus constitutes a significant advance in the art.
1. An apparatus for collecting three-dimensional image information comprising:
   A) at least three non-colinearly disposed imagers for receiving light from objects in a common object space and simultaneously forming respective images therefrom;
   B) an image sensor associated with each of the imagers for sensing, simultaneously with the other image sensors, the image formed by its associated imager; and
   C) means for deriving the imaged objects' three-dimensional positions from the images thus sensed and generating an output representative of the three-dimensional positions thus derived.
2. An apparatus as defined in 1 wherein each imager includes a reflector in the shape of a surface of revolution that reflects the light from which that imager forms the images formed thereby.
3. An apparatus as defined in 2 wherein each imager includes a lens that receives light reflected by that imager's constituent reflector and focuses the light thus received to form the image formed by that imager.
4. An apparatus as defined in 3 wherein each reflector has the shape of at least a segment of a cone.
5. An apparatus as defined in 4 wherein the image sensor includes photographic film and means for developing the film and digitizing the developed film's contents.
6. An apparatus as defined in 1 wherein the image sensor includes photographic film and means for developing the film and digitizing the developed film's contents.
7. An apparatus as defined in 6 wherein each imager includes a 180° fish-eye lens.
8. An apparatus as defined in 1 wherein each imager includes a 180° fish-eye lens.
9. An apparatus for forming a three-dimensional image comprising:
   A) a plurality of image sensors for simultaneously sensing images formed thereon;
   B) an imager associated with each image sensor, each imager receiving light from objects in a common object space and forming a respective image therefrom on its respective image sensor, the imagers being so disposed relative to each other that light from every unobstructed object spaced at least a minimum distance from the imagers in a scene plane is received by at least two of the imagers, which form therefrom a respective pair of images on their respective image sensors; and
   C) means for deriving the imaged objects' three-dimensional positions from the images that the image sensors sense and generating an output representative of the three-dimensional positions thus derived.
10. An apparatus as defined in 9 wherein each imager includes a reflector in the shape of a surface of revolution that reflects the light from which that imager forms the images formed thereby.
11. An apparatus as defined in 10 wherein each imager includes a lens that receives light reflected by that imager's constituent reflector and focuses the light thus received to form the image formed by that imager.
12. An apparatus as defined in 11 wherein each reflector has the shape of at least a segment of a cone.
13. An apparatus as defined in 12 wherein the image sensor includes photographic film and means for developing the film and digitizing the developed film's contents.
14. An apparatus as defined in 9 wherein the image sensor includes photographic film and means for developing the film and digitizing the developed film's contents.
15. An apparatus as defined in 14 wherein each imager includes a 180° fish-eye lens.
16. An apparatus as defined in 9 wherein each imager includes a 180° fish-eye lens.
17. A method of obtaining three-dimensional image information comprising the steps of:
   A) receiving light at at least three non-colinear locations from objects in a common object space and forming three respective images therefrom simultaneously; and
   B) deriving from the objects' three-dimensional positions from the images simultaneously thus formed and generating an output representative of the three-dimensional positions thus derived.

## Claims

1. An apparatus for collecting three-dimensional image information comprising:
A) at least three non-colinearly disposed imagers for receiving light from objects in a common object space and simultaneously forming respective images therefrom;
B) an image sensor associated with each of the imagers for sensing, simultaneously with the other image sensors, the image formed by its associated imager; and
C) means for deriving the imaged objects' three-dimensional positions from the images thus sensed and generating an output representative of the three-dimensional positions thus derived.

2. An apparatus for forming a three-dimensional image comprising:
A) a plurality of image sensors for simultaneously sensing images formed thereon;
B) an imager associated with each image sensor, each imager receiving light from objects in a common object space and forming a respective image therefrom on its respective image sensor, the imagers being so disposed relative to each other that light from every unobstructed object spaced at least a minimum distance from the imagers in a scene plane is received by at least two of the imagers, which form therefrom a respective pair of images on their respective image sensors; and
C) means for deriving the imaged objects' three-dimensional positions from the images that the image sensors sense and generating an output representative of the three-dimensional positions thus derived.

3. An apparatus as defined in claim 1 or 2 wherein each imager includes a reflector in the shape of a surface of revolution that reflects the light from which that imager forms the images formed thereby.

4. An apparatus as defined in claim 3 wherein each imager includes a lens that receives light reflected by that imager's constituent reflector and focuses the light thus received to form the image formed by that imager.

5. An apparatus as defined in claim 4 wherein each reflector has the shape of at least a segment of a cone.

6. An apparatus as defined in claim 5 wherein the image sensor includes photographic film and means for developing the film and digitizing the developed film's contents.

7. An apparatus as defined in claim 1 or 2 wherein the image sensor includes photographic film and means for developing the film and digitizing the developed film's contents.

8. An apparatus as defined in claim 2 or 7 wherein the image imager includes a 180° fish-eye lens.

9. A method of obtaining three-dimensional image information comprising the steps of:
A) receiving light at at least three non-colinear locations from objects in a common object space and forming three respective images therefrom simultaneously; and
B) deriving from the objects' three-dimensional positions from the images simultaneously thus formed and generating an output representative of the three-dimensional positions thus derived.

10. An apparatus for collecting three-dimensional image information comprising:
A) non-colinearly disposed imagers for receiving light from objects;
B) an image sensor associated with each of the imagers for sensing the image; and
C) means for deriving the imaged objects'positions from the images thus sensed and generating an output representative of the positions thus derived.
